# EUROPÄISCHE PATENTSCHRIFT

(11) **EP 0 355 579 B1**
(45) Veröffentlichungstag und Bekanntmachung des Hinweises auf die Patenterteilung: **06.12.1995**
(21) Anmeldenummer: 89114690.4
(22) Anmeldetag: 09.08.1989
(51) Int. Cl.: B29C 65/18, B29L 23/22

(54) **Verfahren und Einrichtung zum Verschweissen von rohrförmigen Teilen aus Kunststoff**
Process and apparatus for welding tubular plastics elements together
Procédé et appareil pour le soudage d'éléments tubulaires en matière thermoplastique

(30) Priorität: 16.08.1988 CH 3068/88
(43) Veröffentlichungstag der Anmeldung: 28.02.1990
(73) Patentinhaber: GEORG FISCHER AKTIENGESELLSCHAFT, CH-8201 Schaffhausen (CH)
(72) Erfinder: Hilpert, Bruno, CH-8253 Diessenhofen (CH)

(56) Entgegenhaltungen:
- EP-A- 0 020 915
- EP-A- 0 284 834
- EP-A- 0 313 732
- WO-A-90/00112
- DE-A- 3 636 891
- DE-B- 2 719 320
- FR-A- 1 518 369
- US-A- 1 636 243
- US-A- 4 144 908
- US-A- 4 424 861
- GB-A-J13611 (G.DAVIS, W DAVIS) & GB-A-13611 A.D. 1909

## Beschreibung

Die Erfindung betrifft ein Verfahren zum Verschweißen von rohrförmigen Teilen aus Kunststoff gemäß dem Oberbegriff des Anspruchs 1 und eine zur Durchführung des Verfahrens erforderliche Einrichtung.

Bekannt ist ein Verfahren der eingangs genannten Art, bei welchem während bzw. nach dem Aufheizen des axial zusammenstossenden rohrförmigen Teile ein Vakuum erzeugt wird. Dadurch soll das Einfallen des aufgeschmolzenen Materials nach Innen bzw. die Bildung eines inneren Wulstes an der Schweissverbindung verhindert werden. Es hat sich jedoch gezeigt, dass mit diesem Verfahren bzw. mit dieser Einrichtung keine in der Festigkeit einwandfreien und am Innenumfang glatten Schweissverbindungen herstellbar sind.

Weiterhin ist es bekannt (DE-B-2830722), zur Verkleinerung von inneren Schweisswülsten am Innenumfang der rohrförmigen Teile eine elastische Einlage anzuodnen, welche am inneren Umfang der rohrförmigen Teile anliegt.

Zum Verschweissen werden jedoch hierbei die stirnseitigen Enden der rohrförmigen Teile durch Anpressen an Heizelementen erwärmt und anschliessend gegeneinander gedrückt, wodurch ein Schweissdruck erzeugt wird. Eine vollkommen wulstfreie Schweissverbindung ist mit diesem Verfahren nicht erreichbar, ausserdem können durch das stirnseitige Erhitzen der Enden der rohrförmigen Teile der Innenraum dieser Teile verschmutzt werden, so dass die erforderliche Sauberkeit bei der Verbindung für Rohrleitungssysteme zur Weiterleitung von Medien mit hohem Reinheitsgrad nicht geeignet ist.

Durch die EP-A-0 020 915 ist ein Verfahren und eine Vorrichtung zum nahtlosen Verbinden von thermoplastischen, rohrförmigen Teilen bekanntgeworden, bei welchem die zusammenstossenden Enden der rohrförmigen Teile mit einer die Teile umschliessenden Heizvorrichtung verbunden werden. Im Inneren der rohrförmigen Teile wird eine im Volumen veränderbare Stützvorrichtung eingebracht, die sich glatt an die Innenwand der rohrförmigen Teile anlegt. Durch die Heizvorrichtung werden die Rohrteile über den ganzen Umfang plastifiziert und durch den von der Wärmeausdehnung auftretende Druck verbunden.

Ein dem im Oberbegriff des Patentanspruches 1 beschriebenes Verfahren ist aus der DE-A-36 36 891 bekannt. Dort wird zum stirnseitigem Stumpfschweissen zweier Kunststoffrohrabschnitten ein Widerlager am Innenumfang der Schweissstelle angelegt. Durch Ziehen an einem Bowdenzug wird das Widerlager gegen die Innenwandungen beider Rohrteile verspannt. Mittels schalenförmiger Heizelemnte werden die Teile von aussen verschweisst, wobei während des Erwärmens die Teile dauernd unter Druck gegeneinander gehalten werden.

Nachteilig bei beiden Verfahren ist, dass kein mechanisches Verdichtung des Materiales erfolgt und damit eine feste Schweissverbindung entsteht.

In der EP-A-0284 834 wird eine Einrichtung zum Verbinden von rohrförmigen Teilen aus Kunststoff gezeigt. Eine innere Stützvorrichtung in Form einer auweitbarer Blase, eine Klemmvorrichtung zur Halterung der zu verschweissenden Rohre in axialer Richtung und eine die Rohre umschliessende Schweissvorrichtung sorgen für den Aufbau eines Schweissdruckes.

Eine andere Schweissvorrichtung wird in der WO-A-90/00112 gezeigt. Mit einer Rohrspannvorrichtung werden die Rohrteile festgeklemmt. Im Innenraum ist im Bereich der Schweissverbindung eine Blase zum Abstützen der Rohrteile angeordnet. Mit einer Heizvorrichtung werden die Rohrteile mittels eines Schweissprogrammes verbunden.

Beide Schriften wurden nach der Erstanmeldung vom 16.08.1988 dieser Erfindung veröffentlicht.

Aufgabe der vorliegenden Erfindung ist die Schaffung eines Verfahrens und einer Einrichtung der eingangs genannten Art, mittels welcher ohne axiales Gegeneinanderdrücken der zu verschweissenden Teile ein genügend grosser Schweissdruck erzeugt wird, so dass eine wulstfreie und feste Verbindung bei rohrförmigen Teilen aus Kunststoff herstellbar ist. Mit dem Verfahren und der Einrichtung sollen insbesondere auch Schweissverbindungen bei Rohrleitungssystemen herstellbar sein, welche für die Weiterleitung von Medien mit hohem Reinheitsgrad vorgesehen sind.

Erfindungsgemäss wird diese Aufgabe durch die kennzeichnenden Verfahrensmerkmale von Anspruch 1 und Einrichtungsmerkmale von Anspruch 2 gelöst.

Besonders vorteilhafte Ausgestaltungen der Erfindung sind in den abhängigen Ansprüchen gekennzeichnet.

Für das Verschweissen von rohrförmigen Enden durch deren stirnseitiges Erwärmen und nachfolgendes axiales Aneinanderdrücken ist jeweils für die unterschiedlichen Werkstoffe und Abmessungen für eine gute Schweissverbindung ein optimaler Zusammenfügedruck bzw. Schweissdruck bekannt, wobei erfindungsgemäss für das im Oberbegriff genannte Schweissverfahren jeweils die gleiche Druckstärke verwendet wird, um auf den Innenumfang der rohrförmigen Teile im Schweissbereich mittels der aufweitbaren Stützvorrichtung zu drücken, um für eine gute aber auch wulstfreie Schweissverbindung eine Verdichtung des Materials im Schweissbereich zu erreichen.

Die Erfindung ist in den beiliegenden Zeichnungen beispielsweise dargestellt und nachfolgend beschrieben.

Es zeigen:
- Fig. 1: einen Teilschnitt einer Einrichtung zum Verschweissen zweier rohrförmiger Teile bei Beginn der Schweissung.
- Fig. 2: eine vereinfachte Darstellung von Fig. 1 während bzw. am Ende des Schweissvorganges
- Fig. 3: ein Zeit-Blasen-Druck-Diagramm des Schweissvorgangs.
- Fig. 4: ein Zeit-Temperatur-Diagramm des Schweissvorgangs.

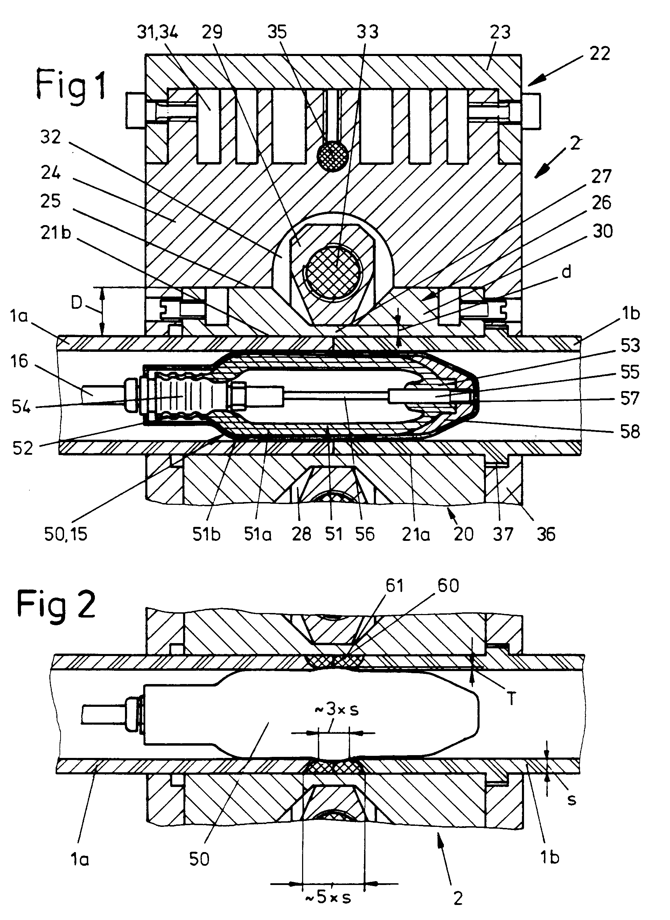

Die Fig. 1 zeigt einen Teilquerschnitt einer Einrichtung zum Schweissen von rohrförmigen Teilen 1a, 1b mit einer Heizvorrichtung 2 und einer Stützvorrichtung 15. Die Heizvorrichtung 2 besteht aus einem Unterteil 20 mit einer im Querschnitt halbkreisförmigen Aufnahme 21a für die zu verschweissenden rohrförmigen Teile 1a und 1b und einem Oberteil 22 mit einer entsprechenden Aufnahme 21b. Das Oberteil 22 ist mittels eines Drehgelenks aufklappbar mit dem Unterteil 20 verbunden und mittels einer Spannvorrichtung gegenseitig verspannbar. Im Unter- und im Oberteil 20 bzw. 22 der Heizvorichtung 2 ist jeweils in einem schalenförmigen Gehäuseteil 23 ein Halteteil 24 bewfestigt, in welchem jeweils in einer Ausdrehung 25 zentriert eine Heizbacke 26 angeordnet ist.

Die Heizbacke 26 weist im mittleren Bereich 27 durch eine Ausnehmung 28 eine zur Aufnahme 21 dünne Wandstärke d für einen guten Wärmedurchgang von einer Heizpatrone 33 zur Schweissstelle auf.

In der Ausnehmung 28 ist ein Heizteil 29 vorzugsweise aus Kupfer angeordnet und durch Lötung mit der aus einer vorzugsweise aus rostfreiem Stahl bestehenden Heizbacke 26 fest verbunden. In dem Heizteil 29 ist die Heizpatrone 33 und ein Thermofühler 35 eingesteckt angeordnet. Durch die Form der Ausnehmung 28 im Querschnitt kann der Temperaturverlauf im mittleren Bereich 27 - der sog. Heizzone festgelegt werden, wobei die beidseitigen Bereiche 30 - welche die Temperierzonen sind, durch die grössere Wandstärke D weniger stark aufgeheizt werden. Der Uebergang von der Wandstärke d zur Wandstärke D der Heizbacke 26 verläuft vorzugsweise schräg, wobei die Längen der einzelnen Partien von der Länge des Schmelzbereiches der rohrförmigen Teile 1a, 1b abhängt. Am Aussenumfang des Halteteils 24 sind Ausnehmungen 31 angeordnet, welche einen Kanal 34 für die Durchführung der von einem Ventilator erzeugten Kühlluft bilden.

Am Innenumfang des Halteteils 24 ist mittig zur Aufnahme des Heizteils 29 eine Ausnehmung 32 angeordnet, durch welche zur raschen Abkühlung des Heizteiles 29 und somit der Schweissverbindung ebenfalls Kühlluft durchgeleitet wird.

Die Seitenwände 36 der Halteteile 24 weisen am Innenumfang eine Ausdrehnung 37 auf, welche in Form und Grösse den Wülsten entsprechen, welche an den als Fittings ausgebildeten zu verschweissenden rohrförmigen Teilen 1b angeordnet sind. Dadurch werden die Fittings in axialer Richtung in richtiger Position gehalten.

Die Stützvorrichtung 15 ist als elastische aufweitbare Blase 50 ausgebildet, wobei der Blasenkörper 51 einen inneren elastischen Mantel 51a zur Aufnahme des Mediendrucks und einen äusseren Mantel 51 b aufweist.

Der äussere Mantel 51b ist aus einem hitzebeständigen elastomeren Werkstoff wir z.B. Silikon hergestellt und weist eine glatte Oberfläche auf. Eine an einem Ende 52 der Blase 50 angeschlossene Luftleitung 16 ist mit einem Drucklufterzeuger, wie z.B. einem Kompressor verbunden. Ein in der Luftleitung 16 angeordneter Druckschalter ist über ein Druckeinstellgerät mit einer Programmsteuerung wirkverbunden und gewährleistet, dass der eingestellte erforderliche Druck in der Blase aufrecht erhalten bleibt.

An den nabenförmig ausgebildeten Enden 52, 53 des inneren Mantels 51a sind Halteteile 54 und 55 angeordnet, zwischen denen ein Zugteil 56, wie z.B. ein biegsamer Stab oder ein Seil 56 befestigt ist. Ein Halteteil 55 ist mittels eines Gewindes 57 und einer Mutter 58 in Längsrichtung einstellbar.

Durch das Zugteil 56 wird die Längenausdehnung der Blase 50 beim Druckaufbau innerhalb der Blase begrenzt, so dass eine Durchmesservergrösserung und somit ein einstellbarer Druck gegen die Innenwände der rohrförmigen Teile 1a, 1b gewährleistet ist.

Der äussere hitzebeständige dünne Mantel 51b überdeckt alle metallischen Teile wie z.B. die Mutter 58 und die Halteteile 54 und 55. Dadurch ist gewährleistet, dass keine metallischen Teile mit der Innenwandung der rohrförmigen Teile 1a, 1b in Berührung kommen was insbesonderes bei Rohrsystemen für die Reinraumtechnik sehr wichtig ist.

Der Druck gegen die Innenwände der rohrförmigen Teile 1a, 1b im Bereich der Stossstelle bzw. der Schweissverbindung sollte jeweils einem Schweissdruck entsprechen, wie er beim Schweissverfahren mit axialem Zusammenfügen angewendet wird. Dieser Druck ist dabei grösser - mindestens jedoch gleichgross - wie der durch die Ausdehnung des Kunststoffs beim Schmelzen entstehende Druck. Der dabei entstehende Schweissdruck gewährleistet eine einwandfreie Schweissverbindung. Je nach Material, Durchmesser und Wandstärke der zu verschweissenden rohrförmigen Teile ist hierfür ein Luftdruck in der Blase von 2 bis 6 bar, vorzugsweise von 3,5 bis 4,5 bar erforderliche.

Nach dem Einspannen der axial aneinanderliegenden rohrförmigen Teile 1a, 1b und dem Einbringen der drucklosen und biegsamen Blase 50 in den Bereich der Stossstelle im Innenraum der rohrförmigen Teile 1a, 1b wird die Zufuhr der Druckluft zur Blase eingeschaltet und gleichzeitig oder nach Erreichen des eingestellten Druckes in der Blase die Heizung in den Heizbacken 28 eingeschaltet. Das durch die hohen Temperaturen von ca. 180 - 250°C aufgeschmolzene Material im Bereich der Stossstelle dehnt sich etwas aus und füllt eventuelle Materialhohlräume, welche z.B. durch nicht exakt aneinanderstossende Teile entstanden sind, aus. Zusätzlich wird die Schmelze durch den Druck der Blase 50 nach aussen gedrückt, wo sie radial durch die Heizbacken 26 und axial durch die nicht aufgeschmolzenen rohrförmigen Teile 1a, 1b gehalten wird. Das aufgeschmolzene Material wird verdichtet, wobei, wie in Fig. 2 ersichtlich, je nach Grösse der vorhandenen Hohlräume am Innendurchmesser durch den Blasendruck eine Einbuchtung 60 mit einer Tiefe T von max. einigen Zehntel Millimetern entstehen kann. Durch die Materialverdichtung im Schweissbereich 61 entsteht eine feste Schweissverbindung. Der Schweissbereich 61 bzw. das aufgeschmolzene Material sollte für eine gute Schweissverbindung ausgehend von der Stossstelle in Längsrichtung am Innendurchmesser je eine Länge von mindestens der 1,5fachen Rohrwanddicke s (insgesamt 3xs) und am Aussendurchmesser mindestens eine Länge der 2,5fachen Rohrwanddicke s (insgesamt 5xs) aufweisen. (siehe Fig. 2).

Nachdem eine bestimmte einstellbare Heizenergie den rohrförmigen Teilen zugeführt wurde, welche material- und dimensionsabhängig ist, wird die Heizung abgestellt und die Luftkühlung eingeschaltet. Haben sich die rohrförmigen Teile bis auf 80 - 90°C abgekühlt, wobei sich die Schweissverbindung verfestigt hat, erfolgt die Druckentlastung der Blase und die zusammengeschweissten Teile können aus der Heizvorrichtung entnommen werden. Die Blase kann ebenfalls durch Herausziehen entfernt werden.

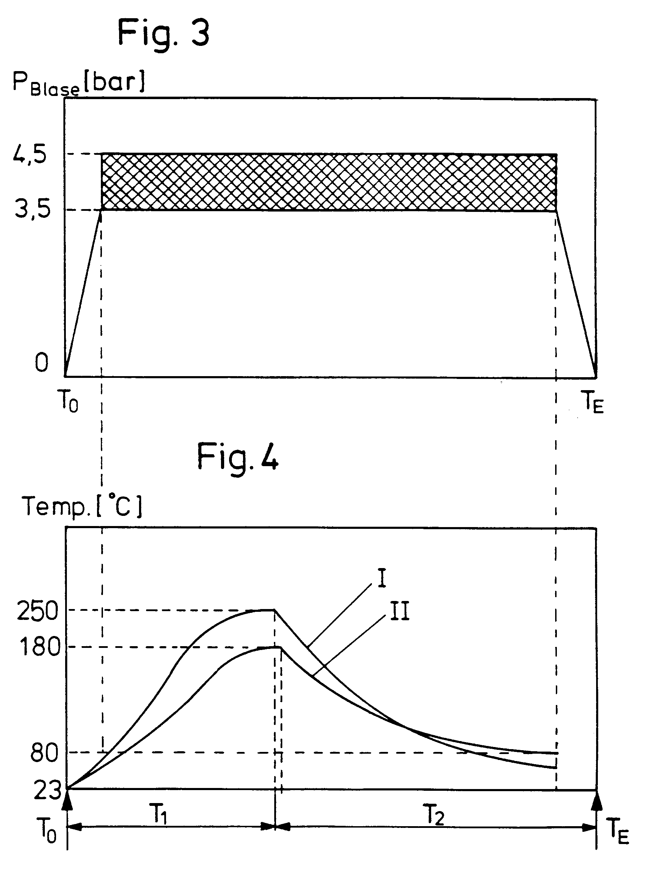

Die Figuren 3 und 4 zeigen je ein Diagramm für den Blasendruck und die Materialtemperaturen, abhängig von der Schweisszeit, bei einer Schweissung von Rohren aus Polyvinylidenfluoride mit einem üblichen Normdurchmesser von 16 bis 63 mm.

Der Luftdruck in der Blase wird dabei gemäss Fig. 3 in einem Bereich zwischen 3,5 und 4,5 bar konstant gehalten.

Aus der Fig. 4 ist durch die Kurve I der Temperaturverlauf an der Aussenwand und durch die Kurve II der Temperaturverlauf an der Innenwand der rohrförmigen Teile 1a, 1b im Schweissbereich ersichtlich. To ist Beginn und Te das Ende der Schweisszeit, wobei diese ca. 7 bis 12 Min. beträgt.

T1 zeigt die Aufheizzeit und T2 die Abkühlzeit.

Bei anderen Materialien, wie z.B. Polyethylen, Polypropylen oder Polychlortrifluorethylen und anderen Dimensionen können die Werte zu diesen gezeigten etwas unterschiedlich sein, wobei der zeitliche Verlauf im wesentlichen gleich ist.

Das erfindungsgemässe Verfahren und die dafür erforderliche Einrichtung gewährleisten eine einwandfreie feste und wulstfreie Schweissverbindung, ohne dass auf die zu verschweissenden Teile ein axialer Druck ausgeübt und somit Längenänderungen im Rohrleitungssystem entstehen können.

Verunreinigungen beim Schweissen im Rohrinnern sind bei diesem Verfahren ebenfalls weitgehend ausgeschlossen.

## Patentansprüche

1. Verfahren zum Schweißen der Enden von rohrförmigen Teilen aus Kunststoff (1a, 1b), wobei die beiden Teile (1a, 1b) mit ihren stirnseitigen Enden aneinanderliegend umfangsmässig von einer Heizvorrichtung (2) umschlossen festgehalten sind, mittels welcher die Enden im Stoßbereich bis zur Aufschmelzung des Materials aufgeheizt und anschliessend gekühlt werden, wobei auf den Innenumfang mittels einer aufweitbaren Stützvorrichtung (15) im Stoßbereich ein Druck ausgeübt wird, dadurch gekennzeichnet, daß der auf den Innenumfang ausgeübte Druck 2 bis 6 bar beträgt und dass die Länge des Aufschmelzbereiches (61) beidseits der Stoßstelle am Außenumfang mindestens je das 2,5fache der Rohrwandstärke s und am Innenumfang mindestens je das 1,5fache der Rohrwandstärke s beträgt.

2. Einrichtung zur Durchführung des Verfahrens nach Anspruch 1 mit einer die rohrförmigen Teile umschließenden und aufklappbaren, Heizbacken (26) aufweisenden Heizvorrichtung (2), sowie mit einer im Innern der rohrförmigen Teile angeordneten Stützvorrichtung (15), welche eine mittels einem Druckmedium aufweitbare elastische Blase ist und im Innern ein die Längsdehnung begrenzendes Zugteil (56) aufweist, dadurch gekennzeichnet, dass jede Heizbacke (26) im mittleren Bereich (27) mit einem aus Kupfer bestehenden und eine elektrische Heizpatrone (33) aufweisenden Heizteil (29) fest verbunden ist und in diesem Bereich (27) für einen guten und raschen Wärmeübergang zu den verschweißenden rohrförmigen Teilen (1a, 1b) eine gegenüber den beidseits anschließenden Bereichen (30) dünnere Wandstärke aufweist.

3. Einrichtung nach Anspruch 2, dadurch gekennzeichnet, daß die Blase (50) einen inneren elastischen Mantel (51a) zur Aufnahme des Mediumdruckes, und einen äußeren elastischen hitzebeständigen Mantel (51b) mit einer glatten Oberfläche aufweist, welcher die Metallteile abdeckt.

4. Einrichtung nach einem der Ansprüche 2 oder 3, dadurch gekennzeichnet, daß die wirksame Länge des Zugteils (56) gegenüber der Blase (50) mittels einer Mutter (57) einstellbar ist.

5. Einrichtung nach einem der Ansprüche 2 bis 4, dadurch gekennzeichnet, daß die Blase (50) mittels eines Schlauches (16) mit einem Drucklufterzeuger verbunden ist, wobei in der Druckluftleitung (16) ein einstellbarer Druckschalter angeordnet ist, welcher mit einer Programmsteuerung der Einrichtung wirkverbunden ist.

## Claims

1. Process for welding the ends of tubular parts (1a, 1b) made of plastics, the two parts (1a, 1b) being gripped and enclosed by a heating device (2) on the circumference with their ends lying next to each other, by means of which heating device the ends are heated in the abutment region until the material melts and are then cooled, a pressure being exerted on the inner circumference by means of an expandable support device (15) in the abutment region, characterised in that the pressure exerted on the inner circumference is 2 to 6 bar and in that the length of the melting region (61) on both sides of the abutment point on the outer circumference is at least 2.5 times the wall thickness s of the tube and on the inner circumference is at least 1.5 times the wall thickness s of the tube.

2. Device for carrying out the process according to claim 1, having a heating device (2) which encloses the tubular parts and has an openable heating jaw (26), and a support device (15) arranged inside the tubular parts, which is an elastic bladder which can be expanded by means of a pressure medium and on the inside has a tensile part (56) limiting the longitudinal expansion, characterised in that each heating jaw (26) is firmly connected in the middle region (27) to a heating part (29) made of copper and having an electric heating cartridge (33) and, for a good and speedy heat exchange to the tubular parts (1a, 1b) to be welded, has a wall thickness in this region (27) which is thinner with respect to the regions (30) adjacent on both sides.

3. Device according to claim 2, characterised in that the bubble (50) has an inner, elastic casing (51a) for receiving the medium pressure, and an outer, elastic, heat-resistant casing (51b) with a smooth surface which covers the metal portions.

4. Device according to one of claims 2 or 3, characterised in that the effective length of the tensile part (56) with respect to the bladder (50) is adjustable by means of a nut (57).

5. Device according to one of claims 2 to 4, characterised in that the bladder (50) is connected by means of a hose (16) to a compressed air generator, an adjustable pressure switch being arranged in the compressed air line (16) and operatively connected to a programme control unit of the device.

## Revendications

1. Procédé de soudage des extrémités d'éléments tubulaires en matière synthétique (1a, 1b), les deux éléments (1a, 1b) étant fixés avec leurs extrémités frontales maintenues fermement et entourées, en s'appuyant l'une contre l'autre, sur périphérie, par un dispositif de chauffage (2), au moyen duquel les extrémités sont chauffées dans la zone de poussée, jusqu'à fusion du matériau, puis refroidies, une pression étant exercée sur la périphérie intérieure dans la zone de poussée, au moyen d'un dispositif d'appui expansible (15), caractérisé en ce que la pression exercée sur la périphérie intérieure est de 2 à 6 bars et en ce que la longueur de la zone de fusion (61) des deux côtés de l'emplacement de poussée, sur la périphérie extérieure, est au moins égale à 2,5 fois l'épaisseur de paroi s et sur la périphérie intérieure au moins égale à 1,5 fois l'épaisseur de paroi s.

2. Dispositif pour la mise en oeuvre du procédé selon la revendication 1, avec un dispositif de chauffage (2) entourant les éléments tubulaires et pouvant être ouvert par rabattement, présentant des mâchoires chauffantes (26), ainsi qu'avec un dispositif d'appui (15) disposé à l'intérieur des parties tubulaires, présentant une vessie élastique, gonflable au moyen d'un fluide sous pression et une partie de traction (56) délimitant l'allongement longitudinal, caractérisé en ce que chaque mâchoire chauffante (26) est reliée rigidement, dans la zone médiane (27), à une partie chauffante (29), réalisée en cuivre et présentant une cartouche chauffante (33) électrique et présentant dans cette zone (27) pour obtenir un transfert de chaleur de bonne qualité et rapide vers les éléments tubulaires (1a, 1b) à souder, une épaisseur de paroi plus mince que celle des zones (30) de raccordement des deux côtés.

3. Dispositif selon la revendication 2, caractérisé en ce que la vessie (50) présente une enveloppe élastique intérieure (51a) pour recevoir le fluide sous pression et une enveloppe élastique extérieure (51b) résistante à la chaleur et à surface lisse, qui recouvre les parties métalliques.

4. Dispositif selon l'une des revendications 2 ou 3 caractérisé en ce que la longueur efficace de la partie de traction (56) par rapport à la vessie (50) est réglable au moyen d'un écrou (57).

5. Dispositif selon l'une des revendications 2 à 4, caractérisé en ce que la vessie (50) est reliée, au moyen d'un tube flexible (16), à un générateur d'air comprimé, un interrupteur à pression réglable, qui est relié fonctionnellement à une commande programmable du dispositif, étant disposé dans la conduite d'air comprimé (16).
